# EUROPEAN PATENT APPLICATION

(11) **EP 1 775 302 A1**
(43) Date of publication of application: **18.04.2007**
(21) Application number: 05388086.0
(22) Date of filing: 11.10.2005
(51) Int. Cl.: C07F 9/58, A61K 31/675

(54) **Method for preparing crystalline sodium risedronate**

(71) Applicant: Sandoz A/S, 5220 Odense SØ (DK)
(72) Inventor: Preikschat, Herbert Fritz, DK-3460 Birkerød (DK); Fischer, Erik, 3500 Værløse (DK); Beck, Frederick, 2880 Bagsværd (DK); Bennekou, Jacob, 2650 Hvidovre (DK)
(74) Representative: Rasmussen, Preben

(57) **Abstract**

A new procedure for preparing crystalline sodium risedronate is disclosed, which procedure takes place under conditions where the availability of water is strictly limited. New sodium risedronate forms prepared according to the new procedure are also disclosed.

The new sodium risedronate forms are useful for the preparation of pharmaceutical compositions for the treatment of diseases of bone and calcium metabolism.

## Description

The present invention relates to a new method for preparing crystalline monosodium risedronate having an uniform and highly reproducible water content.

In a further aspect the invention relates to new crystalline monosodium risedronate forms prepared by the new procedure.

In further aspects the invention relates to pharmaceutical compositions comprising said new sodium risedronate forms.

### BACKGROUND FOR THE INVENTION

Bisphosphonates have been proposed for use in the treatment of diseases of bone and calcium metabolism.

In particular 3-pyridyl-1-hydroxyethylidene-1,1-bisphophonic acid, known as risedronic acid, has been proposed or used for the treatment of disorders in the bone and calcium metabolism, such as osteoporosis, hyperparathyroidism, hypercalcemia of malignancy, osteolytic bone metastases, myositis ossificans progressive, calcinosis universalis, arthritis, neuritis, bursitis, tendiosis and other inflammatory conditions.

Risedronate salts have further been used for the treatment of Paget's disease.

Bisphosphonates have also been proposed for the use in the treatment of parasitic infections. In particular risedronic acid have been proposed for the treatment of infections such as infections with Try*panosoma brucei, Trypanosoma cruzi, Leishmania donovani, Leishmania infantum, Leishmania chagasi, Trypanosoma gondii* and *Plasmodium falciparum.*

Risedronate and related compounds were initially disclosed in EP 186 405, describing the bisphosphonate compounds and pharmaceutical compositions comprising said compounds. Furthermore the use of the compounds for the treatment of diseases characterised by abnormal calcium and phosphate metabolism was suggested.

DE 42 44 422 A1 discloses zinc and magnesium salts of risedronic acid and related bisphosphonic acids, and their use in pharmaceutical compositions.

WO 01/56983 A2 discloses a process for selective crystallisation of monosodium risedronate monohydrate or monosodium risedronate hemipentahydrate.

WO 01/57052 A1 discloses a process for the manufacture of geminal bisphosphonates, including risedronate, and EP 1 243 592 A2 disclose an alternative method for producing risedronic acid.

It is known that monosodium risedronate exists in many different crystalline hydration states, including anhydrate, mono and hemipentahydrate. The hemipentahydrate is the thermodynamically preferred crystalline form under typical processing conditions. However, Nancy Redman-Furey et al.: Thermoanalytical characterization of the hydration states of risedronate;. Pp. 733-738 in Proceedings of the NATAS annual conference on thermal analysis and applications (2002) found that at temperatures above 50°C the monohydrate form was the most stable form.

C. Barbey and M. Lecouvey disclose the crystal structure of a monohydrate of risedronic acid in Z. Kristallogr. NCS 217 (2002) 137-138.

In W.L. Gossmann et al. Acta Cryst. (2002) C59, m33-m36 the crystal structures of three hydrates of risedronate are disclosed.

In WO 03/086355 A1 further new polymorphs and hydrates of sodium risedronate was disclosed as well as methods for preparing them and method for converting one form to another form.

WO 2004/037252 discloses a new hydrated crystalline form of sodium risedronate.

WO 2005/012314 discloses a process for controlling the crystal structure of sodium risedronate. The process provides preferentially the hemipentahydrate form of mono sodium risedronate.

Thus sodium risedronate has until now been found to exist in many different hydration and crystalline forms prepared by slightly different methods, where the particular temperature, solvent etc., may be decisive for the particular obtained polymorph. Additionally, sodium risedronate has often been provided as a mixture of two or more polymorphs. There exists therefore a need for a reliable method for providing sodium risedronate in a uniform and well defined form.

### SHORT DESCRIPTION OF THE INVENTION

In one aspect the present invention relates to a procedure for preparing crystalline sodium risedronate comprising following steps:
a) one equivalent risedronic acid monohydrate is suspended in a first non-aqueous solvent,
b) a solution of approximately one equivalent base and one equivalent sodium ions in a second non-aqueous solvent is added;
c) optionally, the mixture is cooled; and
d) the precipitated sodium risedronate is recovered.

The procedure according to the invention provides crystalline mono sodium risedronate in a highly uniform well defined crystalline hydration form. Further, the procedure is very reliable and not in a high degree affected by minor changes in the conditions during the crystallization, such as changes of temperature, time, concentration etc.

Without wishing to be bound by any theories it is believed that the robustness of the procedures against changes in temperature, time, concentrations etc., is due to the fact that the crystal form is determined not only by these parameters by also by the very limited access to water that according to the invention is provided by securing that substantially all water is provided as crystal water in the risedronic acid monohydrate.

In another aspect the invention relates to new crystalline mono sodium risedronate forms produced by the inventive procedure.

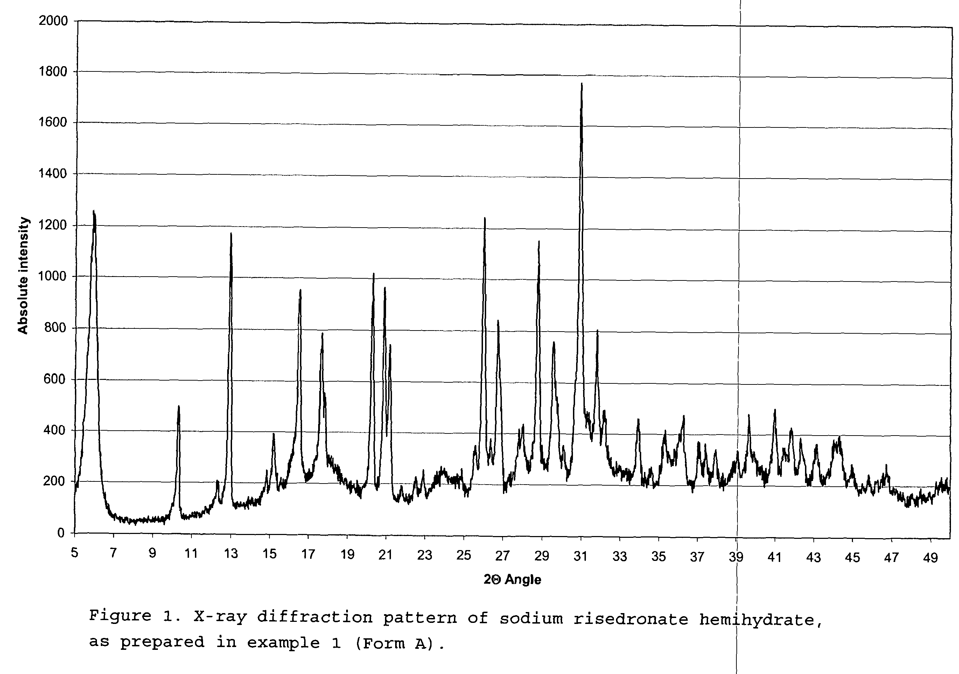

In one preferred embodiment the invention relates to crystalline mono sodium risedronate hemihydrate, preferably having the X-ray diffraction pattern shown in figure 1.

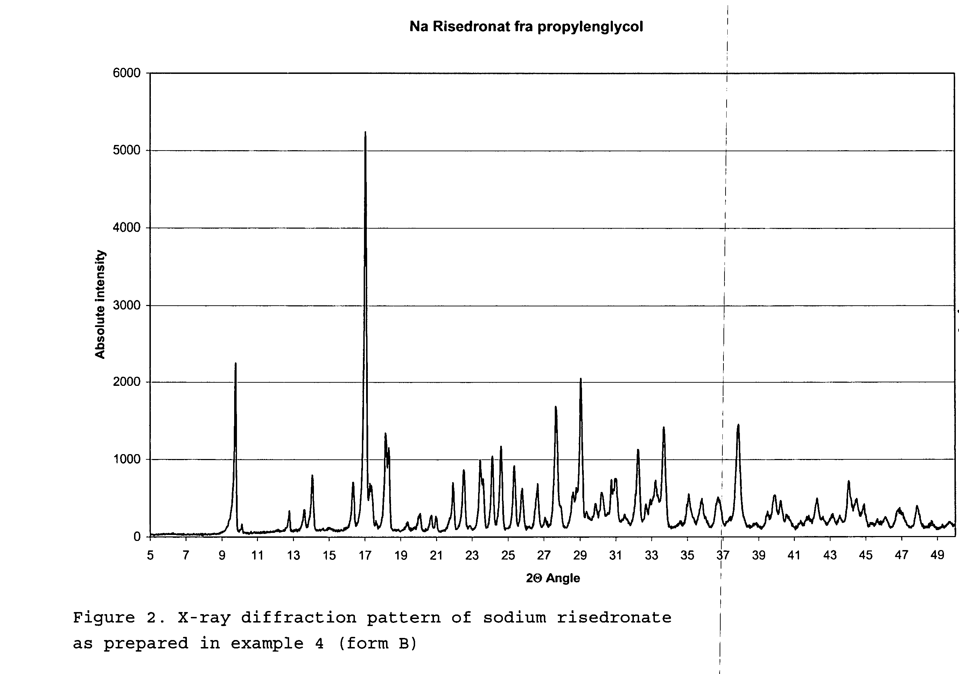

In another preferred embodiment the invention relates to crystalline mono sodium risedronate anhydrate having the X-ray diffraction pattern shown in figure 2.

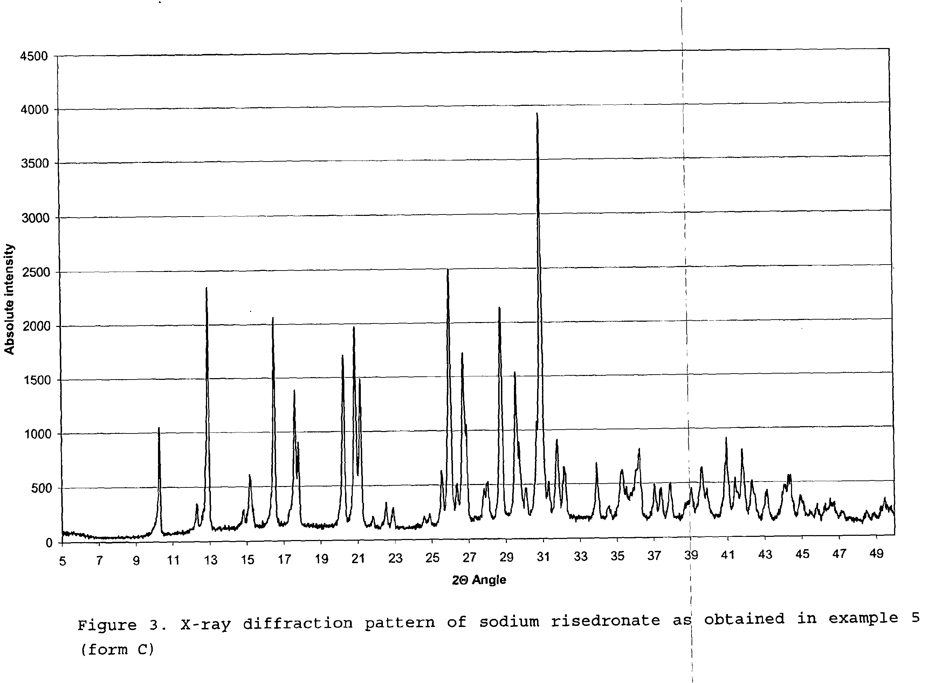

In still another preferred embodiment the invention relates to crystalline mono sodium risedronate having the X-ray diffraction pattern shown in figure 3.

Pharmaceutical compositions comprising said new crystalline mono sodium risedronate forms prepared by the inventive procedure form further aspects of the present invention.

### SHORT DESCRIPTION OF THE DRAWINGS

Figure 1. X-ray powder diffraction pattern of crystalline mono sodium risedronate hemihydrate confer example 3.
Figure 2. X-ray powder diffraction pattern of crystalline mono sodium risedronate anhydrate prepared according to example 4.
Figure 3. X-ray powder diffraction pattern of crystalline mono sodium risedronate prepared according to example 5.
Figure 4. X-ray powder diffraction pattern of crystalline mono sodium risedronate prepared according to example 6.
Figure 5. X-ray powder diffraction pattern of crystalline mono sodium risedronate hemipentahydrate prepared according to example 7.

### DETAILED DESCRIPTION OF THE INVENTION

The invention is based on the realization that one method of controlling the hydration form would be controlling the amount of available water during the crystallisation. One way of controlling the amount of available water during the crystallization is to secure that substantially all the water in the crystallization mixture is provided together with the risedronic acid, which is known and commercially available as the monohydrate.

In step a) of the procedure according to the invention one equivalent risedronic acid is suspended in a first non-aqueous solvent. This is usually done under agitation or stirring of the mixture.

The suspension may in principle take place under any suitable temperature between the melting point and the boiling point of the solvent; however, usually it is preferred to suspend the risedronic acid in the solvent under heating.

It may even be possible to perform the procedure according to the invention with only partly dissolution of the risedronic acid in step a) since the dissolution rate of solid risedronic acid will be increased when the base is added in step b).

With the term "non-aqueous solvent" is intended to mean any solvent capable of completely or partially dissolving the risedronic acid monohydrate, which solvent does not contain water.

As examples of non-aqueous solvents can be mentioned alcohols, acetone, ethers, such as dihydrofuran, hexane and toluene.

Preferably the non-aqueous solvent is an alcohol having 1-5 C-atoms such as methanol ethanol, propanol, isopropanol, butanol, pentanol, ethylenglycol and propylenglycol.

The non-aqueous solvent may even be a mixture of two or more non-aqueous solvents.

In step b) of the procedure according to the invention, a solution of approximately one equivalent base and one equivalent sodium ions in a second non-aqueous solvent is added to the suspension of risedronic acid in a first non-aqueous solvent.

The base may in principle be any base having a sufficient base strength to release one H-atom from the risedronic acid. It is preferred to use a base that does not produce water by the reaction with risedronic acid. It is further preferred to use a base that does not provide positive ions to the solution except sodium ions.

Examples of preferred bases include: ammonia, methylamine and sodium alcoholate such as sodium methanolate, sodium ethanolate and sodium ethyleneglycolate.

Any compound capable of releasing the required sodium ions, such as sodium salts, may in principle provide the sodium ions.

In one preferred embodiment is the base and the sodium ions provided by a sodium salt or a sodium alcoholate such as sodium methanolate, sodium ethanolate and sodium ethyleneglycolate.

The second non-aqueous solvent may be the same as the first non-aqueous solvent or the second non-aqueous solvent may be a different solvent selected from same definition.

Sodium alcoholates are for the most cases commercially available.

Alternatively, a method for providing the solution of approximately one equivalent base and one equivalent sodium ions in a second non-aqueous solvent is the dissolution of approximately one equivalent sodium in an alcohol, preferably an alcohol having 1-5 C-atoms. By this dissolution one equivalent of a sodium alcoholate will be formed providing both the base and the sodium ions required according to the invention. This method is preferred for sodium alcoholates that are not commercially available.

The skilled person will appreciate that the dissolution of sodium in an alcohol strictly spoken is not a simple dissolution process but a chemical reaction between sodium and alcohol forming sodium cations, alcoholate anions and hydrogen. However for simplicity this reaction is in this description and claims called dissolution.

Preferably the sodium is dissolved in an alcohol selected among methanol, ethanol, propanol, isopropanol, butanol and ethyleneglycol.

The addition of the solution of approximately one equivalent base and one equivalent sodium ions in a second non-aqueous solvent to the suspension of risedronic acid in a first non-aqueous solvent is performed under condition securing a thorough mixing of the reaction mixture, such as under stirring.

Often stirring is continued in e.g. 10-60 minutes after mixing to allow mixing and reaction to take place.

If the solution of risedronic acid in the first non-aqueous solvent still contains solid risedronic acid when the solution containing the base and the sodium ions is added, it is preferred to stir the mixture for a certain period e.g. 10-60 minutes before proceeding to step c) in order to secure that all risedronic acid has been converted into a sodium risedronate salt.

Next in step c) the mixture is cooled. Preferably the mixture is cooled under stirring.

Depending on the particular selected conditions and solvents used in step a) and b) the sodium risedronate may precipitate immediately after the addition of sodium ions and base in step b) or it may first precipitate during the cooling. Thus, it may be possible to dispense with the step c). Even if the sodium risedronate precipitates immediately after the addition in step b) it is usually preferred to cool the mixture in step c) in order to obtain a higher yield, however, it may be desired under particular selected conditions to avoid the cooling step c) and continue directly with the separation step d) directly after step b).

If necessary crystallization may be initiated using usual procedures for initiating crystallisation, such as scratching on the side of the container, adding seed crystals etc.

In order to precipitate the sodium risedronate it is necessary that the concentration in the mixture from step b) is sufficiently high. This will usually be the case as a result of the selection of a sufficiently high concentration of risedronic acid in step a) and a corresponding high concentration of the solution in step b). In case that the concentration of the mixture from step b) is not sufficiently high the concentration may be increased by removing part of the solvent before cooling and precipitation e.g. by evaporation of solvent. It is clearly within the capabilities of the skilled person to select suitable concentration of the solutions used in step a) and b) and to decide if a concentration e.g. by evaporation should be performed before precipitation.

Finally, in step d) the precipitated crystalline sodium risedronate is recovered using procedures well known within the area.

Usually step d) is performed by way of a filtration process. If desired the filtrate may be concentrated by evaporation of part of the solvent and further sodium risedronate crystallized from the concentrated filtrate and thereby increasing the yield.

After filtration the obtained crystalline sodium risedronate is usually rinsed with cold solvent and dried before using the product.

It is an important feature of the present invention that the amount of water available during the crystallization is strictly limited. Therefore, the reagents used in the procedure should be substantially free of water.

The risedronic acid monohydrate should be provided in a form where substantially all water present is the water bound in stoichiometric amounts in the crystal structure.

The solvents used in the procedure according to the invention should have a water content of less than 0.5%, preferably less than 0.1%, more preferred less than 0.05 %, even more preferred less than 0.01%, and in a particular preferred embodiment less than 0.005%.

Similarly, the base and the sodium ions should be provided without adding water to the system, such as by providing the base and the sodium ions as anhydrous reagents.

The inventors has observed that using the procedure according to the invention the solvents selected as the first and the second non-aqueous solvents determines the particular form in which the sodium risedronate is obtained.

Without wishing to be bound by any theories it is believed that the particular obtained form is determined by the strength of the interactions between the available water and the solvent.

In one preferred embodiment of the procedure according to the invention the first and the second non-aqueous solvents are both methanol. In this embodiment the sodium risedronate is recovered as monosodium risedronate hemihydrate. In the present description and claims this form is called form A.

The monosodium risedronate hemihydrate (Form A) has been analyzed using powder X-ray diffraction analysis and it was found that it had the X-ray diffraction pattern shown in figure 1.

Thus, in another aspect the invention relates to crystalline sodium risedronate hemihydrate, preferably having the x-ray diffraction pattern shown in figure 1.

Form A can easily be converted into monosodium risedronate hemipentahydrate by contacting with excess water. For example may Form A be converted into sodium risedronate hemipentahydrate by stirring a dispersion thereof in water. Usually, stirring the mono sodium risedronate hemihydrate (Form A) with water at a temperature between 0 and 50°C, preferably at ambient temperature, and for a period between 2 and 48 hours, preferably 24 hours, provides a satisfactory conversion.

In another preferred embodiment of the procedure according to the invention is the first non-aqueous solvent propylene glycol and the second non-aqueous solvent methanol. In this embodiment the sodium risedronate is recovered as monosodium risedronate anhydrate. In the present description and claims this form is called form B. The sodium risedronate has been analyzed using powder X-ray diffraction analysis and it was found that it had the X-ray diffraction pattern shown in figure 2.

Thus, in another aspect the invention relates to crystalline monosodium risedronate anhydrate, preferably having the x-ray diffraction pattern shown in figure 2.

In another preferred embodiment of the procedure according to the invention are the first non-aqueous solvent n-propanol and the second non-aqueous solvent methanol. In the present description and claims this form is called form C. The sodium risedronate has been analyzed using powder X-ray diffraction analysis and it was found that it had the X-ray diffraction pattern shown in figure 3.

Thus, in another aspect the invention relates to crystalline monosodium risedronate having the x-ray diffraction pattern shown in figure 3.

In another preferred embodiment of the procedure according to the invention the first and the second non-aqueous solvents are both ethanol. In this embodiment the sodium risedronate is recovered in form C.

Pharmaceutical compositions comprising crystalline sodium risedronate prepared according to the invention form another aspect of the invention.

The pharmaceutical composition may according to the invention comprise one or more mono sodium risedronate forms according to the invention and further excipients well known within the pharmaceutical area. The pharmaceutical compositions may be prepared using well known techniques for formulating such compositions.

The invention is now further illustrated by the following examples, which are provided solely for illustration and are not intended to be limiting in any way.

### EXAMPLES

### Example 1. Preparation of sodium risedronate hemihydrat (form A) using methanol as solvent.

30.44 g risedronic acid monohydrate (the acid is commercially available) was suspended in 300 ml anhydrous methanol under reflux with stirring.

2.3 g Sodium was dissolved in 200 ml anhydrous methanol and added to the suspension of risedronic acid, and stirred at ambient temperature. After approximately 30 minutes the mixture had changed character to a thick suspension due to precipitation of sold material. The container was placed on ice and stirring was continued for 45 minutes and subsequently the crystalline material was recovered by filtration. The product was obtained as crystals having a small particle size leading to a slow filtration.

Remaining liquid was removed from the crystalline material by suction and the crystals were dried at 45-50°C. 29 grams of crystals was obtained corresponding to a yield of 92%.

The obtained product was analysed by microanalysis. Based on the micro analysis the degree of hydration was found to correspond to a hemi hydrate.
Calculated for the anhydrous form: C 27.56 %, H 3.30 %, N 4.59 %
Found: C 26.69 %, H 3.5 %, N 4.27 %.

Based on these analyses it was confirmed that the obtained product was monosodium risedronate hemihydrate.

### Example 2. Preparation of sodium risedronate hemihydrat (Form A) using methanol as solvent

60.44 g risedronic acid monohydrate (the acid is commercially available) was suspended in 600 ml anhydrous methanol under reflux with stirring.

4.6 g Sodium was dissolved in 400 ml anhydrous methanol and slowly added dropwise over a period of 105 minutes to the suspension of risedronic acid maintaining the heating and refluxing of the reaction mixture and subsequently the reaction mixture was stirred under reflux for additionally 45 minutes.

The container was placed on ice and stirring was continued for 45 minutes and subsequently the crystalline material was recovered by filtration.

Remaining liquid was removed from the crystalline material by suction and the crystals were dried at 45-50°C. 62 grams of crystals was obtained.

The obtained product was analysed by microanalysis. Based on the micro analysis the degree of hydration was found to correspond to a hemi hydrate.
Calculated for the anhydrous form: C 27.56 %, H 3.30 %, N 4.59 %
Found: C 27.35 %, H 3.41 %, N 4.43 %.

Analysis (differential scanning calorimetry and IR spectroscopy) showed that the obtained product has same crystal structure as the product obtained in example 1, but the particle size was larger making this product more filterable.

### Example 3. Powder X-ray diffraction analysis sodium risedronate hemihydrate.

Form A as prepared according to example 1 was analysed by powder X-ray diffraction analysis.

The X-ray diffraction pattern is shown in figure 1. By comparing this diffraction pattern with published X-ray diffraction patterns of known sodium risedronate form it appears that the disclosed pattern is different from previously known X-day diffraction patterns, confirming that the monosodium risedronate hemihydrate as prepared in example 1 differs from previous known sodium risedronate forms.

### Example 4. Preparation of sodium risedronate anhydrate (Form B) using propylene glycol and methanol as solvents

30.44 g risedronic acid monohydrate (the acid is commercially available) was suspended in 200 ml anhydrous propylene glycol and heated to a temperature of 60°C with stirring.

2.3 g Sodium was dissolved in 60 ml anhydrous methanol and added to the suspension of risedronic acid, and stirred at a temperature of 60°C. After approximately 3 minutes the mixture had changed character to a thick suspension due to precipitation of solid material. The mixture was stirred at same temperature for 45 minutes whereafter the suspension again had attained a less viscous appearance. The container was placed on ice and stirring continued for 45 minutes and subsequently the crystalline material was recovered by filtration.

The crystalline material was washed with 200 ml cold methanol and remaining liquid was removed from the crystalline material by suction and the crystals were dried at 45-50°C. 21 grams of crystals was obtained.

The obtained product was analysed by microanalysis. Based on the micro analysis it was found that the product was an anhydrous form.
Calculated : C 27.56 %, H 3.30 %, N 4.59 %
Found: C 27.86 %, H 3.25 %, N 4.47 %.

The x-ray powder diffraction pattern of the obtained product was recorded and is shown in figure 2.

### Example 5. Preparation of sodium risedronate hemihydrate (Form C) using n-propanol and methanol as solvents

30.44 g risedronic acid monohydrate (the acid is commercially available) was suspended in 200 ml anhydrous n-propanol and heated to a temperature of 95°C with stirring.

2.3 g Sodium was dissolved in 60 ml anhydrous methanol and added to the suspension of risedronic acid, and stirred at a temperature of 88-90°C. Shortly thereafter the mixture had changed character to a granular appearance due to precipitation of solid material. The mixture was stirred at same temperature for 1 hour. The container was placed on ice and stirring continued for 45 minutes and subsequently the crystalline material was recovered by filtration.

The crystalline material was washed with 200 ml cold n-propanol and remaining liquid was removed from the crystalline material by suction and the crystals were dried at 45-50°C. 30.7 grams of crystals was obtained.

The x-ray powder diffraction pattern of the obtained product was recorded and is shown in figure 3.

### Example 6. Preparation of sodium risedronate anhydrate (form C) using ethanol as solvent

30.44 g risedronic acid monohydrate (the acid is commercially available) was suspended in 200 ml anhydrous ethanol and refluxed a temperature of 80°C with stirring.

2.3 g Sodium was dissolved in 60 ml anhydrous ethanol and added to the suspension of risedronic acid, and stirred under reflux. The mixture was stirred under reflux for 45 minutes. The container was placed on ice and cooled to 10°C and subsequently the crystalline material was recovered by filtration.

The crystalline material was washed with 50 ml cold ethanol and remaining liquid was removed from the crystalline material by suction and the crystals were dried at 45-50°C. 30 grams of crystals was obtained.

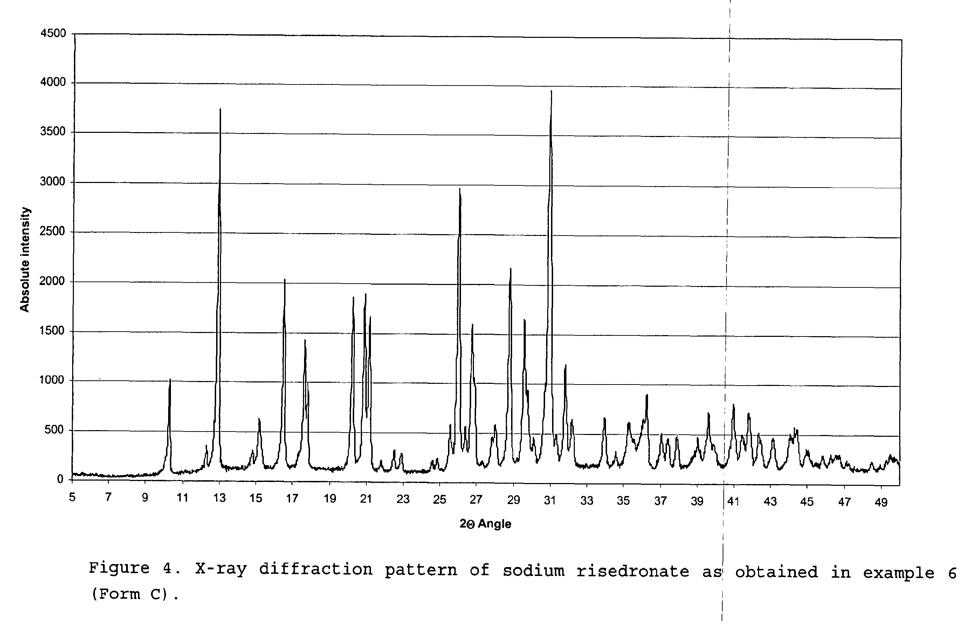

The x-ray powder diffraction pattern of the obtained product was recorded and is shown in figure 4. Based on the recorded X-ray diffraction pattern it was determined that the product was identical to form C.

### Example 7. Conversion of sodium risedronate hemihydrate to sodium risedronate hemipentahydrate.

2.2 g sodium risedronate hemihydrate as obtained in example 1, was stirred in 15 ml water at ambient temperature for 24 hours.

The solid material was recovered by filtration and dried at 50°C for 5 hours.

Differential scanning calorimetry and IR spectroscopy of the obtained material showed that the obtained material corresponded to sodium risedronate hemipentahydrate, prepared according to the literature.

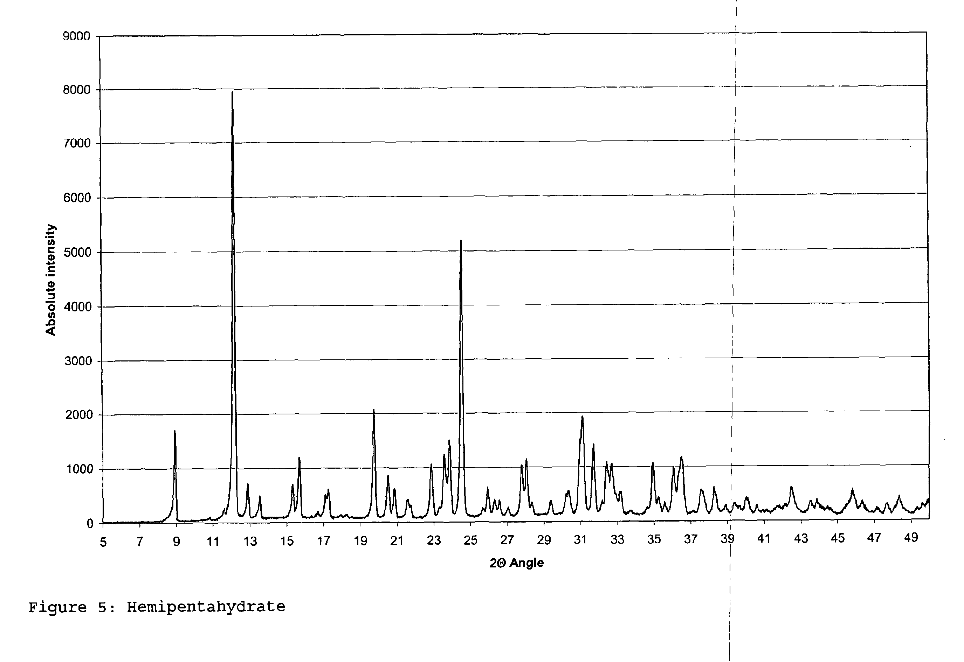

The X-ray diffraction pattern of the mono sodium risedronate hemipentahydrate prepared according to this example is shown in figure 5.

## Claims

1. A procedure for preparing crystalline sodium risedronate comprising the following steps:
a) one equivalent risedronic acid monohydrate is suspended in a first non-aqueous solvent,
b) a solution of approximately one equivalent base and one equivalent sodium ions in a second non-aqueous solvent is added;
c) optionally, the mixture is cooled; and
d) the precipitated sodium risedronate is recovered.

2. The procedure according to claim 1, comprising step c)

3. The procedure according to claim 1 or claim 2, wherein the first non-aqueous solvent and the second non-aqueous solvent are independently selected among alcohols, acetone, ethers, dihydrofuran, hexane and toluene.

4. The procedure according to claim 3, wherein the first non-aqueous solvent and the second non-aqueous solvent are independently selected among alcohols having 1-5 carbon atoms.

5. The procedure according to claim 4, wherein the first non-aqueous solvent and the second non-aqueous solvent are independently selected among methanol ethanol, propanol, isopropanol, butanol, pentanol, ethylenglycol and propylenglycol.

6. The procedure according to any of the claims 1 to 5, wherein the first non-aqueous solvent is the same as the second non-aqueous solvent.

7. The procedure according to any of the claims 1-6, wherein the base is selected among: ammonia, methylamine, sodium alcoholate, sodium methanolate, sodium ethanolate and sodium ethyleneglycolate.

8. The procedure according to any of the claims 1-7, wherein the sodium ions are provided by a compound selected among: sodium alcoholate, sodium methanolate, sodium ethanolate and sodium ethyleneglycolate.

9. The procedure according to any of the claims 1-6, wherein the solution of approximately one equivalent base and one equivalent sodium ions in a second non-aqueous solvent is provided by dissolving sodium in an alcohol.

10. A crystalline monosodium risedronate hemihydrate compound.

11. The compound according to claim 10, which is monosodium risedronate hemihydrate having the X-ray diffraction pattern shown in figure 1.

12. A crystalline monosodium risedronate anhydrate compound having the X-ray diffraction pattern shown in figure 2.

13. A crystalline monosodium risedronate compound having the X-ray diffraction pattern shown in figure 3.

14. Pharmaceutical composition comprising a compound according to any of the claims 10 to 13.

15. Method for preparing mono sodium risedronate hemipentahydrate, wherein mono sodium risedronate hemihydrate is stirred with water.

16. Method according to claim 15, wherein mono sodium risedronate hemihydrate is stirred with water at ambient temperature for 24 about hours.
